# EUROPEAN PATENT SPECIFICATION

(11) **EP 3 543 508 B1**
(45) Date of publication and mention of the grant of the patent: **18.09.2024**
(21) Application number: 19173910.1
(22) Date of filing: 04.12.2017
(51) Int. Cl.: F02C 7/18, F02C 7/36

(54) **GAS TURBINE ENGINE WITH INTERCOOLED COOLING AIR AND CONTROLLED BOOST COMPRESSOR**
GASTURBINENMOTOR MIT ZWISCHENGEKÜHLTER KÜHLLUFT UND GESTEUERTEM BOOST-VERDICHTER
MOTEUR À TURBINE À GAZ À AIR DE REFROIDISSEMENT REFROIDI ET COMPRESSEUR À SURPRESSION RÉGULÉ

(30) Priority: 05.12.2016 US 201615368726
(43) Date of publication of application: 25.09.2019
(62) Divisional of application: 17205087.4
(73) Proprietor: RTX Corporation, Farmington, CT 06032 (US)
(72) Inventor: SNAPE, Nathan, Tolland, CT Connecticut 06084 (US); STAUBACH, Joseph Brent, Colchester, CT Connecticut 06415 (US)
(74) Representative: Dehns

(56) References cited:
- EP-A1- 3 056 714
- EP-A1- 3 085 924
- EP-A1- 3 109 437
- EP-A1- 3 287 623
- EP-A1- 3 318 743
- US-A- 5 452 573

## Description

### BACKGROUND OF THE INVENTION

This application relates to a gas turbine engine wherein cooling air passes through a boost compressor to be delivered to a turbine section for cooling.

Gas turbine engines are known and typically include a fan delivering air into a bypass duct as propulsion air and into a compressor as core air. The air is compressed in the compressor and delivered into a combustor where it is mixed with fuel and ignited. Products of this combustion pass downstream over turbine rotors driving them to rotate. The turbine rotors, in turn, drive the compressor and fan rotor.

As known, the turbine components are exposed to very high temperatures. As such, it is known to deliver cooling air to the turbine.

Historically, the fan rotor rotated as one with a fan drive turbine. However, more recently, a gear reduction is placed between the fan rotor and the fan drive turbine. With this change, the fan may rotate at slower speeds than the fan drive turbine. This allows a designer to increase the speed of the fan drive turbine. This increase results in higher temperatures in the turbine section.

The higher temperatures raise cooling challenges. The higher temperatures also result in higher pressures at an upstream end of the turbine section. This is where one branch of the cooling air is typically delivered. As such, the cooling air must be at a sufficiently high pressure that it can move into this environment.

Historically, air from near a downstream end of the compressor section has been tapped to provide cooling air. However, with the move to a geared gas turbine engine, the efficient use of all air delivered into the core engine becomes more important. As such, utilizing air which has already been fully compressed is undesirable.

Recently, it has been proposed to tap the cooling air from a location upstream of the downstream most location in the compressor. This air is then passed through a boost compressor, which increases its pressure such that it now can move into the turbine section.

US 5 452 573 A discloses a prior art gas turbine engine as set forth in the preamble of claim 1.

EP 3 056 714 A1 discloses a prior art intercooled cooling air system using cooling compressor as starter.

### SUMMARY OF THE INVENTION

From a first aspect, the invention provides a gas turbine engine as recited in claim 1.

Features of embodiments of the invention are set forth in the dependent claims.

These and other features may be best understood from the following drawings and specification.

### BRIEF DESCRIPTION OF THE DRAWINGS

Figure 1 schematically shows a gas turbine engine.
Figure 2 schematically shows a first arrangement falling outside the wording of the claims.
Figure 3 schematically shows an embodiment in accordance with the claims.
Figure 4 schematically shows a second arrangement falling outside the wording of the claims.

### DETAILED DESCRIPTION

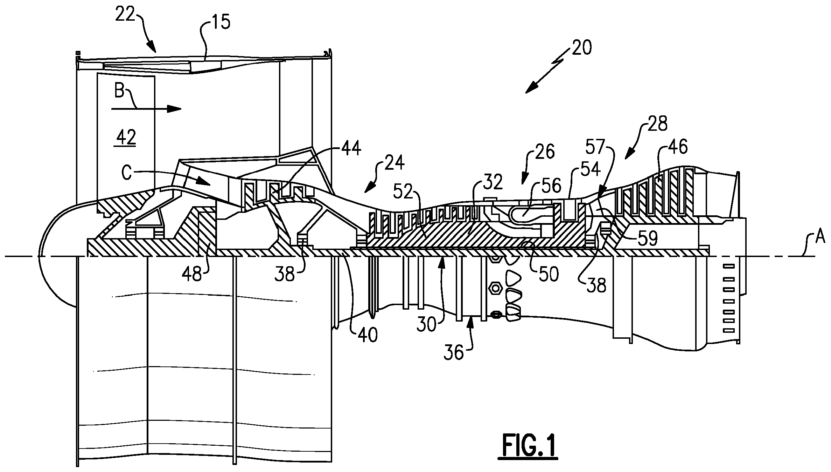

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

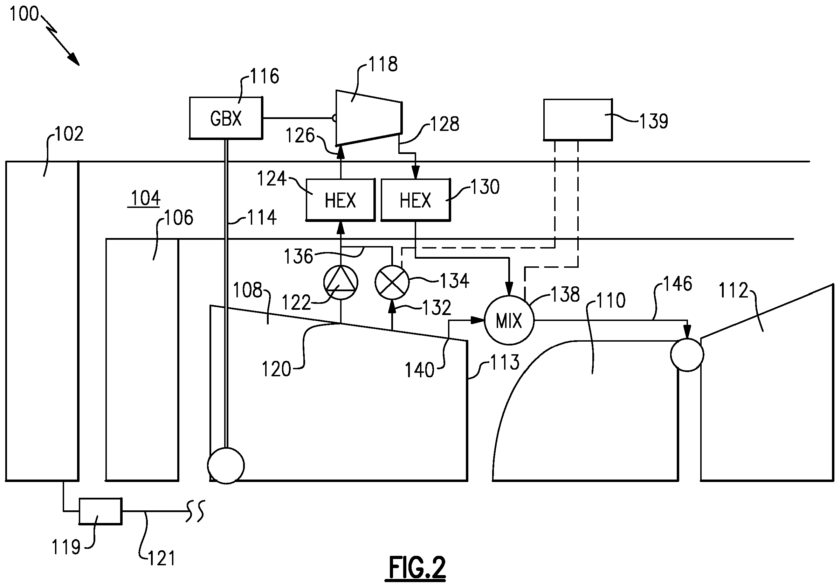

Gas turbine engine 100 is illustrated in Figure 2, which, *per se,* falls outside the wording of the claims. A fan 102 delivers air into a bypass duct 104 as propulsion air. The fan 102 also delivers air to a low pressure compressor 106. The air then passes into a high pressure compressor 108. A tap 140 is shown in the high pressure compressor adjacent a downstream most end 113 of the compressor. Another tap 120 is shown at a location upstream of the downstream most end 113. Air compressed by the compressor 108 passes into a combustor 110. The air is mixed with fuel and ignited and products of this combustion pass over a high pressure turbine 112. In this embodiment, there will typically be at least a second turbine stage. In some embodiments, there may be a third turbine stage which drives the fan 102. A gear reduction 119 is shown between a shaft 121 driven by a fan drive turbine (which may be the second turbine or the third turbine, if one is included).

Air from the tap 120 is utilized as cooling air. It passes through a valve 122 to a heat exchanger 124. The air in the heat exchanger 124 is cooled by the bypass air in duct 104. Of course, other locations for the heat exchanger may be selected. Downstream of the heat exchanger 124 air passes through a boost compressor 118 through line 126. The boost compressor 118 is driven by an accessory driveshaft or takeoff shaft 114 through a gearbox 116. Shaft 114 may be driven by the high pressure turbine 112. Also, while bypass air is used to cool the heat exchanger, other fluids, such as fuel, may cool the heat exchanger.

Air downstream of the boost compressor 118 passes through a heat exchanger 130 through line 128, and then to a mixing chamber 138. It should be understood that while two heat exchangers are illustrated, only one heat exchanger may be needed. In the mixing chamber 138, air from the downstream location 140 is mixed with the air from the location 120 to arrive at a desired mix of temperature and pressure to be delivered at line 146 to cool the high pressure turbine 112.

As an example, at lower power operation, more air from the downstream most location 140 may be utilized with limited disadvantage to efficiency. The mixing chamber 138 may be a passive orifice feature. As long as the pressure downstream of the boost compressor is higher than the air from location 140, the boost compressor air will flow for cooling. Air from the tap 140 will make up any difference in the required flow volume. Alternatively, a control 139 may control the mixing chamber 138. Control 139 may be a standalone control or may be part of a full authority digital electronic controller (FADEC).

In the Figure 2 arrangement, the mixing chamber 138 does provide the ability to tailor the air being delivered to the turbine section 112, somewhat. Still, there may be times when demand for the air drops and there could be parasitic losses. In addition, there may be instances where it would be desirable to assist the boost compressor 118 in matching the operation of the compressors 106 and 108 over a larger range of operational conditions. Further, it may be desirable to provide variability in the intercooled cooling air system to match other aircraft system needs. As can be seen, the valve 122 is a check valve and thus provides a relatively controlled pressure to the boost compressor 118. However, a second tap 132 passes through a controlled valve 134, which may also be controlled by control 139, and into a line 136 to mix with the air from tap 120. By controlling the valve 134, the demand on the boost compressor 118 can be controlled. That is, should it be desirable to reduce the demand on the boost compressor 118 more of the higher pressure air from tap 132, from a location intermediate that of taps 120 and 140 may be utilized. Further, if the air is passing from tap 132 to line 136, that could create a higher pressure downstream of the check valve 122, thus limiting the flow from the tap 120. A worker of ordinary skill in the art would recognize when to actuate the valve 134 to achieve the desired controls.

The above arrangement with the valve 134 being used to control, if not block, flow downstream of the check valve 122 is one way. A separate arrangement might have a valve 134 which is able to modulate the pressure, such that a desired pressure can be delivered to the boost compressor. Both embodiments achieve a desired pressure head heading into the boost compressor.

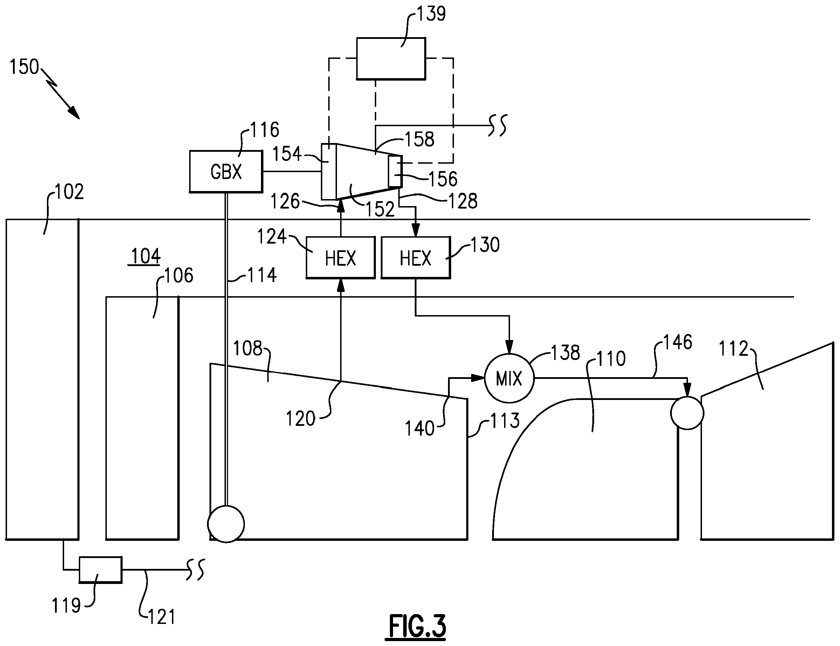

Figure 3 shows an embodiment 150 wherein a boost compressor 152 is provided with several ways to provide variability. As an example, a variable area inlet or vapor core 154 may be positioned on a suction side of the compressor 152. This can allow adjustment of a vane or throat quantity to change how much air passes to the compressor 152. In addition, a variable area diffuser 156 may be positioned on a downstream end. Again, this can be opened to limit the impact of the compressor 152 and reduce downstream pressures.

The control 139 may operate here to match conditions with the system. A worker of ordinary care and skill in the art would recognize the various conditions that might desirably indicate a need for controlling operation of the boost compressor.

These embodiments control both inlet pressure head and outlet pressure.

As shown at 158, there is an optional variable tap at a mid-compression point in the boost compressor 152. Tap 158 may limit the volume of air passing to the heat exchanger 130. Again, the control 139 will control operation of the tap through a valve or other means to achieve a desired and controlled output.

Further, a plurality of taps may be utilized such that desired bleed pressures can be achieved dependent on output needs.

It should be understood that three types of control of Figure 2 could be used separately, or in combination.

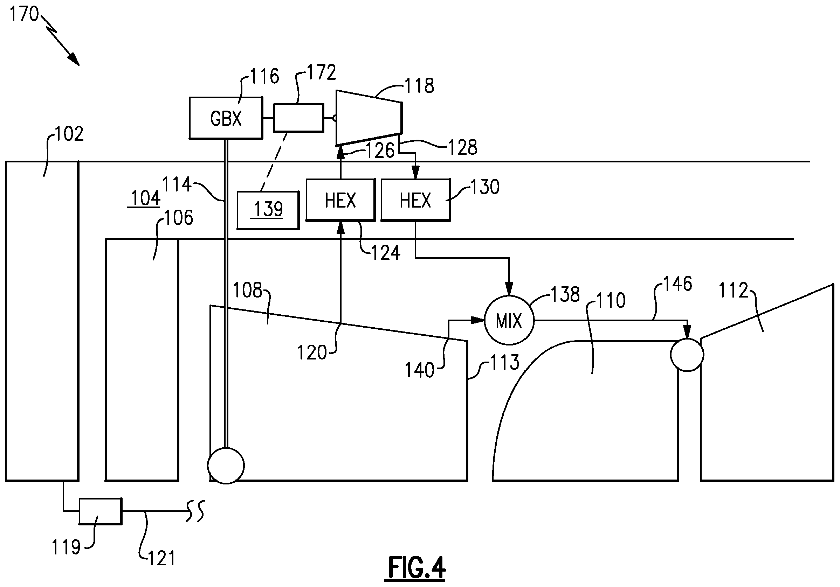

Figure 4 shows yet another arrangement 170 falling outside the wording of the claims. Here, a transmission or differential 172 is positioned between the gearbox 116 and boost compressor 118. This may be a passive control that ensures the boost compressor 118 operates at a fixed speed no matter the input speed. Alternatively, the control 139 could control the transmission or differential 172 to achieve varying speeds for the boost compressor 118.

The passive arrangement could be utilized to keep the boost compressor within a limited speed band, rather than a "fixed speed." The controlled embodiment can be utilized to achieve a variety of speed bands.

Here again, a worker of ordinary skill in this art would recognize what conditions might indicate a need to control the boost compressor operation.

Although embodiments of this invention have been disclosed, a worker of ordinary skill in this art would recognize that certain modifications would come within the scope of this invention. For that reason, the following claims should be studied to determine the true scope and content of this invention.

## Claims

1. A gas turbine engine (100; 150; 170) comprising:
a compressor section (108) having a downstream most end (113) and a cooling air tap (120) at a location spaced upstream from said downstream most end (113), air from said cooling air tap (120) being passed through at least one boost compressor (118; 152) and at least one heat exchanger (124; 130), and then passed to a turbine section (112) to cool said turbine section (112), said boost compressor (118; 152) being controlled to provide a desired pressure to said turbine section (112), wherein said boost compressor (152) is provided with a controllable output (156); wherein:
said boost compressor (152) is provided with a variable area inlet (154); or
the gas turbine engine further comprises a controlled and variable mid-compression point tap (158) in said boost compressor (152); or
said control for said boost compressor (152) includes a variable area diffuser (156) at a downstream end of said boost compressor (152), wherein said variable area diffuser (156) is operable to control an inlet pressure head and an outlet pressure;
**characterised in that**:
the gas turbine engine (100; 150; 170) further comprises a mixing chamber (138) that receives air downstream of said boost compressor (118; 152) and selectively receives air from a second location (140) which has been compressed by said compressor section (108) to a pressure higher than a pressure of said cooling air tap (120), wherein said mixing chamber (138) is configured to control a mixture of said airflow downstream of said boost compressor (118; 152), and said airflow from said second location (140) to selectively deliver a mixture of the airflows to said turbine section (112).

2. The gas turbine engine (100... 170) as set forth in claim 1, wherein said heat exchanger is in a bypass duct (104) and cooled by bypass air (B) from a fan rotor (42, 102).

3. The gas turbine engine (100... 170) as set forth in claim 1 or 2, further comprising a fan rotor (42; 102) driven by a fan drive turbine (46) in said turbine section (28) through a gear reduction (48; 119).

4. The gas turbine engine (100... 170) as set forth in any preceding claim, wherein said at least one exchanger (124, 130) comprises a first heat exchanger (124) between said cooling air tap (120) and said boost compressor (118; 152) and a second heat exchanger (130) downstream of said boost compressor (118; 152).

5. The gas turbine engine (100... 170) as set forth in claim 4, wherein said heat exchangers (124, 130) are in a or the bypass duct (104) and cooled by bypass air (B) from a or the fan rotor (42, 102).

6. The gas turbine engine (100... 170) as set forth in any preceding claim, wherein said boost compressor (118; 152) is controlled by a controlled tap (132) downstream of said cooling air tap (120), and also upstream from said downstream most end (113), wherein a control (139) is configured to control the flow of air from said controlled tap (132) to said at least one heat exchanger (124, 130).

7. The gas turbine engine (100... 170) as set forth in claim 6, wherein said cooling air tap (120) passes through a cooling air tap valve (122) to said at least one heat exchanger (124; 130).

8. The gas turbine engine (100... 170) as set forth in claim 7, wherein said controlled tap (132) communicates to a line (136) to mix with air from said cooling air tap (120), and downstream of said cooling air tap valve (122).

9. The gas turbine engine (100... 170) as set forth in claim 8, wherein said cooling air tap valve (122) is a check valve (122).

10. The gas turbine engine (100... 170) as set forth in any preceding claim, further comprising a valve (122) that controls or modulates the pressure of the air passing to said at least one boost compressor (118; 152).

11. The gas turbine engine (150) as set forth in any preceding claim, wherein said boost compressor (152) is provided with a variable area inlet (154).

12. The gas turbine engine (150) as set forth in any preceding claim, further comprising a controlled and variable mid-compression point tap (158) in said boost compressor (152).

13. The gas turbine engine (150) as set forth in any preceding claim, wherein said control for said boost compressor (152) includes a variable area diffuser (156) at a downstream end of said boost compressor (152).

14. The gas turbine engine (100... 170) as set forth in any preceding claim, further comprising a take-off shaft (114) driven by a turbine (112) which drives at least a portion of said compressor section (24) configured to drive a gearbox (116) to, in turn, drive said boost compressor (118, 152).

15. The gas turbine engine (170) as set forth in claim 14, further comprising a transmission and/or differential (172) positioned between said gearbox (116) and said boost compressor (118) to control the speed of said boost compressor (118), optionally wherein said at least one of said transmission or differential (172):
is passive and maintains a speed band for said boost compressor (118); or
is controlled by a control to achieve a desired speed for said boost compressor (118).

## Patentansprüche

1. Gasturbinenmotor (100; 150; 170), umfassend:
einen Verdichterabschnitt (108), der ein am weitesten stromabwärtiges Ende (113) und einen Kühlluftabgriff (120) an einem Standort aufweist, der stromaufwärts von dem am weitesten stromabwärtigen Ende (113) beabstandet ist, wobei Luft von dem Kühlluftabgriff (120) durch mindestens einen Boost-Verdichter (118; 152) und mindestens einen Wärmetauscher (124; 130) geleitet wird und dann zu einem Turbinenabschnitt (112) geleitet wird, um den Turbinenabschnitt (112) zu kühlen, wobei der Boost-Verdichter (118; 152) gesteuert wird, um dem Turbinenabschnitt (112) einen gewünschten Druck bereitzustellen, wobei der Boost-Verdichter (152) mit einem steuerbaren Ausgang (156) versehen ist; wobei:
der Boost-Verdichter (152) mit einem Einlass mit variabler Fläche (154) bereitgestellt wird; oder
der Gasturbinenmotor ferner einen gesteuerten und variablen Abgriff (158) für den mittleren Verdichtungspunkt in dem Boost-Verdichter (152) umfasst; oder
die Steuerung für den Boost-Verdichter (152) einen Diffusor (156) mit variabler Fläche an einem stromabwärtigen Ende des Boost-Verdichters (152) beinhaltet, wobei der Diffusor (156) mit variabler Fläche so betrieben werden kann, dass er eine Einlassdruckhöhe und einen Auslassdruck steuert;
**dadurch gekennzeichnet, dass**:
der Gasturbinenmotor (100; 150; 170) ferner eine Mischkammer (138) umfasst, die Luft stromabwärts des Boost-Verdichters (118; 152) empfängt und selektiv Luft von einem zweiten Standort (140) empfängt, die durch den Verdichterabschnitt (108) auf einen Druck verdichtet wurde, der höher ist als ein Druck des Kühlluftabgriffs (120), wobei die Mischkammer (138) dazu konfiguriert ist, ein Gemisch aus dem Luftstrom stromabwärts des Boost-Verdichters (118; 152) und dem Luftstrom von dem zweiten Standort (140) zu steuern, um selektiv ein Gemisch der Luftströme an den Turbinenabschnitt (112) zu liefern.

2. Gasturbinenmotor (100...170) nach Anspruch 1, wobei der Wärmetauscher in einer Bypassleitung (104) liegt und durch Bypassluft (B) aus einem Lüfterrotor (42, 102) gekühlt wird.

3. Gasturbinenmotor (100...170) nach Anspruch 1 oder 2, ferner umfassend einen Lüfterrotor (42; 102), der durch eine Lüfterantriebsturbine (46) in dem Turbinenabschnitt (28) über ein Untersetzungsgetriebe (48; 119) angetrieben wird.

4. Gasturbinenmotor (100...170) nach einem der vorhergehenden Ansprüche, wobei der mindestens eine Tauscher (124, 130) einen ersten Wärmetauscher (124) zwischen dem Kühlluftabgriff (120) und dem Boost-Verdichter (118; 152) und einen zweiten Wärmetauscher (130) stromabwärts des Boost-Verdichters (118; 152) umfasst.

5. Gasturbinenmotor (100...170) nach Anspruch 4, wobei die Wärmetauscher (124, 130) in einer oder der Bypassleitung (104) liegen und durch Bypassluft (B) aus einem oder dem Lüfterrotor (42, 102) gekühlt werden.

6. Gasturbinenmotor (100...170) nach einem der vorhergehenden Ansprüche, wobei der Boost-Verdichter (118; 152) durch einen gesteuerten Abgriff (132) stromabwärts des Kühlluftabgriffs (120) und auch stromaufwärts des am weitesten stromabwärtigen Endes (113) gesteuert wird, wobei eine Steuerung (139) dazu konfiguriert ist, den Luftstrom von dem gesteuerten Abgriff (132) zu dem mindestens einen Wärmetauscher (124, 130) zu steuern.

7. Gasturbinenmotor (100...170) nach Anspruch 6, wobei der Kühlluftabgriff (120) durch ein Kühlluftabgriffsventil (122) zu dem mindestens einen Wärmetauscher (124; 130) geleitet wird.

8. Gasturbinenmotor (100...170) nach Anspruch 7, wobei der gesteuerte Abgriff (132) mit einer Leitung (136) kommuniziert, um sich mit der Luft aus dem Kühlluftabgriff (120) zu vermischen, und stromabwärts des Kühlluftabgriffs (122).

9. Gasturbinenmotor (100...170) nach Anspruch 8, wobei das Kühlluftabgriffsventil (122) ein Rückschlagventil (122) ist.

10. Gasturbinenmotor (100...170) nach einem der vorhergehenden Ansprüche, ferner umfassend ein Ventil (122), das den Druck der Luft steuert oder moduliert, die zu dem mindestens einen Boost-Verdichter (118; 152) geleitet wird.

11. Gasturbinenmotor (150) nach einem der vorhergehenden Ansprüche, wobei der Boost-Verdichter (152) mit einem Einlass mit variabler Fläche (154) bereitgestellt wird.

12. Gasturbinenmotor (150) nach einem der vorhergehenden Ansprüche, ferner umfassend einen gesteuerten und variablen Abgriff (158) für den mittleren Verdichtungspunkt in dem Boost-Verdichter (152).

13. Gasturbinenmotor (150) nach einem der vorhergehenden Ansprüche, wobei die Steuerung für den Boost-Verdichter (152) einen Diffusor (156) mit variabler Fläche an einem stromabwärtigen Ende des Boost-Verdichters (152) beinhaltet.

14. Gasturbinenmotor (100...170) nach einem der vorhergehenden Ansprüche, ferner umfassend eine Abtriebswelle (114), die durch eine Turbine (112) angetrieben wird, die mindestens einen Abschnitt des Verdichterabschnitts (24) antreibt, die dazu konfiguriert ist, ein Getriebe (116) anzutreiben, um wiederum den Boost-Verdichter (118, 152) anzutreiben.

15. Gasturbinenmotor (170) nach Anspruch 14, ferner umfassend ein Übersetzungsgetriebe und/oder Differential (172), das zwischen dem Getriebe (116) und dem Boost-Verdichter (118) angeordnet ist, um die Drehzahl des Boost-Verdichters (118) zu steuern, wobei optional das mindestens eine von dem Übersetzungsgetriebe oder Differential (172):
passiv ist und ein Drehzahlband für den Boost-Verdichter (118) aufrechterhält; oder
durch eine Steuerung gesteuert wird, um eine gewünschte Drehzahl für den Boost-Verdichter (118) zu erreichen.

## Revendications

1. Moteur à turbine à gaz (100 ; 150 ; 170) comprenant :
une section de compresseur (108) ayant une extrémité la plus en aval (113) et un robinet d'air de refroidissement (120) au niveau d'un emplacement espacé en amont de ladite extrémité la plus en aval (113), l'air provenant dudit robinet d'air de refroidissement (120) passant à travers au moins un compresseur à surpression (118 ; 152) et au moins un échangeur de chaleur (124 ; 130), puis étant envoyé vers une section de turbine (112) pour refroidir ladite section de turbine (112), ledit compresseur à surpression (118 ; 152) étant régulé pour fournir une pression souhaitée à ladite section de turbine (112), dans lequel ledit compresseur à surpression (152) est doté d'une sortie régulable (156) ; dans lequel :
ledit compresseur à surpression (152) est pourvu d'une entrée de surface variable (154) ; ou
le moteur à turbine à gaz comprend en outre un robinet de point de compression intermédiaire régulé et variable (158) dans ledit compresseur à surpression (152) ; ou
ladite régulation dudit compresseur à surpression (152) comporte un diffuseur de surface variable (156) au niveau d'une extrémité aval dudit compresseur à surpression (152), dans lequel ledit diffuseur de surface variable (156) peut fonctionner pour réguler une hauteur de pression d'entrée et une pression de sortie ;
**caractérisé en ce que** :
le moteur à turbine à gaz (100 ; 150 ; 170) comprend en outre une chambre de mélange (138) qui reçoit de l'air en aval dudit compresseur à surpression (118 ; 152) et reçoit sélectivement de l'air provenant d'un second emplacement (140) qui a été comprimé par ladite section de compresseur (108) à une pression supérieure à une pression dudit robinet d'air de refroidissement (120), dans lequel ladite chambre de mélange (138) est configurée pour réguler un mélange dudit écoulement d'air en aval dudit compresseur à surpression (118 ; 152), et dudit écoulement d'air provenant dudit second emplacement (140) pour délivrer sélectivement un mélange des écoulements d'air à ladite section de turbine (112).

2. Moteur à turbine à gaz (100...170) selon la revendication 1, dans lequel ledit échangeur de chaleur se trouve dans un conduit de dérivation (104) et est refroidi par l'air de dérivation (B) provenant d'un rotor de soufflante (42, 102).

3. Moteur à turbine à gaz (100...170) selon la revendication 1 ou 2, comprenant en outre un rotor de soufflante (42 ; 102) entraîné par une turbine d'entraînement de soufflante (46) dans ladite section de turbine (28) à travers un réducteur (48 ; 119).

4. Moteur à turbine à gaz (100... 170) selon une quelconque revendication précédente, dans lequel ledit au moins un échangeur (124, 130) comprend un premier échangeur de chaleur (124) entre ledit robinet d'air de refroidissement (120) et ledit compresseur à surpression (118 ; 152) et un second échangeur de chaleur (130) en aval dudit compresseur à surpression (118 ; 152).

5. Moteur à turbine à gaz (100...170) selon la revendication 4, dans lequel lesdits échangeurs de chaleur (124, 130) se trouvent dans un ou le conduit de dérivation (104) et sont refroidis par l'air de dérivation (B) provenant d'un ou du rotor de soufflante (42, 102).

6. Moteur à turbine à gaz (100... 170) selon une quelconque revendication précédente, dans lequel ledit compresseur à surpression (118 ; 152) est régulé par un robinet régulé (132) en aval dudit robinet d'air de refroidissement (120), et également en amont de ladite extrémité la plus en aval (113), dans lequel une régulation (139) est configurée pour réguler l'écoulement d'air à partir dudit robinet régulé (132) vers ledit au moins un échangeur de chaleur (124, 130).

7. Moteur à turbine à gaz (100... 170) selon la revendication 6, dans lequel ledit robinet d'air de refroidissement (120) passe à travers une vanne de robinet d'air de refroidissement (122) vers ledit au moins un échangeur de chaleur (124 ; 130).

8. Moteur à turbine à gaz (100... 170) selon la revendication 7, dans lequel ledit robinet régulé (132) communique avec une conduite (136) pour se mélanger à l'air provenant dudit robinet d'air de refroidissement (120), et en aval de ladite vanne de robinet d'air de refroidissement (122).

9. Moteur à turbine à gaz (100... 170) selon la revendication 8, dans lequel ladite vanne de robinet d'air de refroidissement (122) est un clapet anti-retour (122).

10. Moteur à turbine à gaz (100...170) selon une quelconque revendication précédente, comprenant en outre une vanne (122) qui régule ou module la pression de l'air passant vers ledit au moins un compresseur à surpression (118 ; 152).

11. Moteur à turbine à gaz (150) selon une quelconque revendication précédente, dans lequel ledit compresseur à surpression (152) est pourvu d'une entrée de surface variable (154) .

12. Moteur à turbine à gaz (150) selon une quelconque revendication précédente, comprenant en outre un robinet de point de compression intermédiaire régulé et variable (158) dans ledit compresseur à surpression (152).

13. Moteur à turbine à gaz (150) selon une quelconque revendication précédente, dans lequel ladite régulation dudit compresseur à surpression (152) comporte un diffuseur de surface variable (156) au niveau d'une extrémité aval dudit compresseur à surpression (152).

14. Moteur à turbine à gaz (100...170) selon une quelconque revendication précédente, comprenant en outre un arbre de décollage (114) entraîné par une turbine (112) qui entraîne au moins une partie de ladite section de compresseur (24) configurée pour entraîner une boîte de vitesses (116) pour, à son tour, entraîner ledit compresseur à surpression (118, 152).

15. Moteur à turbine à gaz (170) selon la revendication 14, comprenant en outre une transmission et/ou un différentiel (172) positionné entre ladite boîte de vitesses (116) et ledit compresseur à surpression (118) pour réguler la vitesse dudit compresseur à surpression (118), éventuellement dans lequel ledit au moins parmi ladite transmission ou ledit différentiel (172) :
est passif et maintient une plage de vitesse pour ledit compresseur à surpression (118) ; ou
est régulé par une régulation pour atteindre une vitesse souhaitée pour ledit compresseur à surpression (118).
